# EUROPEAN PATENT APPLICATION

(11) **EP 3 154 037 A1**
(43) Date of publication of application: **12.04.2017**
(21) Application number: 15199357.3
(22) Date of filing: 10.12.2015
(51) Int. Cl.: G08B 21/02, B60R 21/015, G08B 21/24

(54) **CHILD CAR SEAT ALARM SYSTEM**

(30) Priority: 08.10.2015 US 201514878015
(71) Applicant: Carlson, Crystal, Coolidge, Arizona 85128 (US)
(72) Inventor: Carlson, Crystal, Coolidge, Arizona 85128 (US)
(74) Representative: Romano, Giuseppe

(57) **Abstract**

A child car seat alarm system for informing a child left unattended in a locked vehicle. The system includes a weight detection sensor, wherein said weight detection sensor activates when a child is positioned in a child safety seat; a power source for operating said child car seat alarm system; a wireless alert unit, wherein said unit connected through said system via Bluetooth technology.

## Description

### FIELD OF THE INVENTION

The present invention relates to a child car seat alarm system for use in connection with transporting infants in vehicles. More particularly, to a system for alerting when a child is left in a vehicle, when a driver exits the vehicle and the child is left behind.

### BACKGROUND OF THE INVENTION

There are many child warning devices in the prior art that are used to warn a guardian that they are leaving their child in a car-seat. One such prior art patent U.S. patent number 6,998,988 issued February 4, 2006 to Kalce discloses an infant alarm system for automobiles that sets off an alarm when the driver seat is unoccupied; the system has a pressure sensor pad for detecting the presence of a person in a car seat. The system also uses a belt buckle switch that determines whether a belt buckle is buckled into an infant car seat. The system also has a control box that is electrically connected to the pressure sensor pad and the belt buckle switch. The control box is for outputting an alarm signal when the belt buckle switch indicates that the belt buckle is buckled into the infant car seat and the pressure sensor pad does not detect the presence of the person in the car seat. The present invention is not analogous to Kalce, for it is a simple device that only depends on the child car seat belt buckle being buckled and a receiver that will trigger an alarm when the receiver is a certain distance from the child car seat.

Another prior art publication U.S. patent publication number 2007/0222622 published on September 27, 2007 to Sweeney discloses a system for alerting someone that a child is in a safety seat in a vehicle includes a proximity sensor/transmitter and a receiver. The receiver removably mounts on a child's car seat and the proximity sensor/transmitter remains on the car seat. After a child is placed in the seat, the receiver is removed from the seat and placed on the driver or other adult responsible for the child. The receiver can be placed in the person's purse or on their person. If the person moves away from the vehicle without disabling the transmitter on the car seat will activate that receiver as soon as the receiver has moved a prescribed distance away from the vehicle. The receiver will generate a signal, such as an audible and/or visible signal, which will attract the attention of the person carrying the receiver. The signal will be generated in a continuous manner until the transmitter is disabled, which can only be done after the child is removed from the seat. The present invention is not analogous to Sweeney in that it is directed to a child car seat alarm system that is only armed by the child car seat belt buckle being buckled and disarmed by the child car seat belt buckle being unbuckled. The belt buckle creates a closed loop that activates a transmitter that is fixedly attached to the child car seat.

Therefore, there is a need for a child car seat system that will warn a guardian of a child that a child has been left in the child car seat that is simple to manufacture and does not require the end user to install components into their vehicle. The present invention solves this problem and a unique and novel manner.

### SUMMARY OF THE INVENTION

The present invention is directed to an improved child car seat alarm system through the use of a sensor that can be controlled and monitored through a cell phone app and may also be implemented with a key chain fob using wireless or Bluetooth technology. The child car seat alarm system comprises a casing adapted to be attached to any existing child car seat. A child car seat alarm system for informing a child left unattended in a locked vehicle. The system includes a weight detection sensor, wherein said weight detection sensor activates when a child is positioned in a child safety seat; a power source for operating said child car seat alarm system; a wireless alert unit, wherein said unit connected through said system via Bluetooth technology.

In another preferred embodiment, the child car seat alarm system uses a belt buckle connected to a portable power source, control circuit, and an alerting output device for identifying when a child is placed in a child safety seat using the childs seat buckle as the sensor. In use, the child car seat alarm system ensures that a guardian must unbuckle a child prior to walking a certain distance away from a vehicle or an alarm will sound.

For a better understanding of the invention, its operating advantages and the specific objects attained by its uses, reference should be had to the accompanying description and drawings. A child car seat alarm system for informing a child left unattended in a locked vehicle. The system includes a weight detection sensor, wherein said weight detection sensor activates when a child is positioned in a child safety seat; a power source for operating said child car seat alarm system; a wireless alert unit, wherein said unit connected through said system via Bluetooth technology

### BRIEF DESCRIPTION OF THE DRAWINGS

The invention will be better understood and objects other than those set forth above will become apparent when consideration is given to the following detailed description thereof. Such description makes reference to the annexed drawings wherein:
**FIGURE 1** illustrates a perspective view of a child car seat alarm system to the embodiments of the present invention;
**FIGURE 2** is a perspective view of a child car seat;
**FIGURE 3A** is a front view of the child car seat alarm system in accordance with the present invention; and
**FIGURE 3B** illustrates rear view of a child car seat alarm system to the embodiments of the present invention.

### DETAILED DESCRIPTION OF THE INVENTION

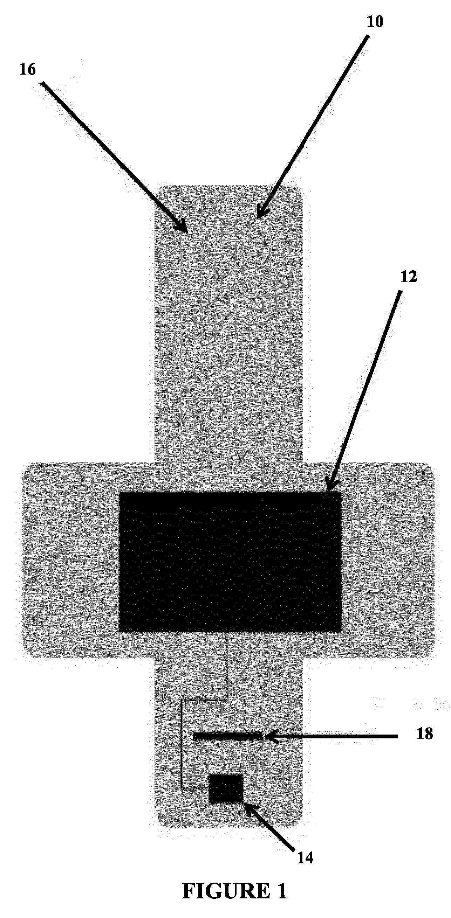

Referring now to **FIGURE 1****,** there is shown and illustrated a child car seat alarm system **10** of the present invention for detecting a child left unattended in an otherwise unoccupied vehicle and for generating a warning signal to a driver in response to the detection. The child car seat alarm system **10** uses a sensor **12** connected to a power source **14** all of which is located inside a waterproof casing **16** and linked to a wireless alert unit such as key fob and/or a cell phone (not shown).

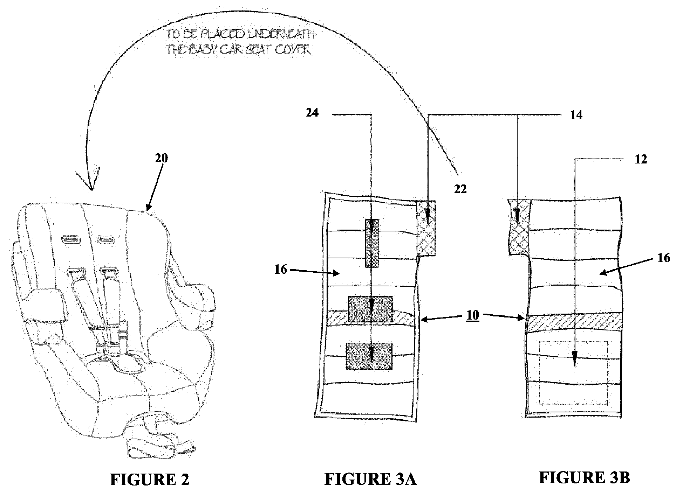

Referring now to **FIGURE 2, 3A** and **3B****,** there is illustrated an installation and additional details of the present invention. The child car seat alarm system **10** is secured to any commercial child seat as provided by the manufacturer of said child safety seat **20.** Moreover, the sensor **12** and power source **14** will be covered with a waterproof casing **16.** The sensor **12** should be placed within a 5 inches wide, by 8 inches tall center placement of the outer pad system. The sensor **12** should be powered by a small lithium battery, similar to an electronics battery. A sturdy and secure wiring is run from the sensor area to an outer side or top placement of the battery within the padding system. These batteries are packed in a pocket using a screw lock system that requires a small flat head screw driver for opening. The outer pocket of the battery area will have a waterproof zipper in place for easy access. The unit will measure 19 inches tall, by 9 inches wide. There will be slits measured and cut in place, according to the average car seat manufactures guidelines.

Furthermore, the waterproof casing **16** of the child car seat alarm system **10** is placed **22** on the bottom of any existing car seat cover. It may be attached with a Velcro placement system **24** or stiched in place by ther manufacture. In preferred embodiment, each unit will come with Velcro to be used in the installation process. This will allow for the unit to stay in place underneath the car seat cover. The Velcro system **24** and the size and placement **22** of the pad or waterproof casing **16** will allow for the child car seat alarm system **10** to stay still for any given length of time. It should be understood that the child car seat alarm system **10** is an all in one unit and should be long enough to account for the movement of the baby. The weight limit for the triggered alarm should be close to one pound. This will account for the weight, depletion of a leaning child and baby.

The sensor should be connected to a central hub that can be controlled and monitored through a cell phone app and also implemented to be used along with a key chain fob. The connectivity is connected through the use of Bluetooth technology. The app should be linked to the safety device with a specific serial number input as the device becomes activated for first time use. The app should be allowed for connecting multiple devices and consideration should be used in implementing dual user connectivity. The phone app will have an option of a password required to deactivate an alarm in case of accidental alarming (placing items in a car seat, i.e.; purse, bags, etc.) The app will also have a setting where the parent/ guardian can pre-program up to 3 numbers for a text message notification for when the alarm goes off.

The safety system **10** disclosed herein has a sensor **12** that is located inside a waterproof casing **16,** and links itself to a key-fob and a cell phone that has loaded an app. This has a proximity sensor that the system connects to. This system becomes armed once a child has sat on it. It is weight triggered. This means when the seat is empty it will not arm and go off. The system connects through wireless or Bluetooth technology to the key-fob and cell phone. The system will send a notification to the key-fob and cell phone via an alarm sound signal once either item has gone beyond a certain distance from the seat sensor. In addition, the present system allows an addition of multiple phones and key-fobs to be added to expand this system usage.

## Claims

1. A child car seat alarm system, comprising:
a weight detection sensor, wherein said weight detection sensor activates when a child is positioned in a child safety seat;
a power source for operating said child car seat alarm system; and
a wireless alert unit, wherein said unit connected through said system via Bluetooth technology.

2. The child car seat alarm system of claim 1, wherein said sensor and power source are located inside a waterproof casing.

3. The child car seat alarm system of claim 1, wherein said sensors are placed within a 5 inches wide, by 8 inches tall center placement of said casing.

4. The child car seat alarm system of claim 1, wherein said system provides a secure wiring run from said sensor area to an outer side or top placement of said battery within said casing.

5. The child car seat alarm system of claim 1, wherein said power source is a small lithium battery, similar to an electronics battery.

6. The child car seat alarm system of claim 1, wherein said casing is attached to the seat by Velcro placement system.

7. The child car seat alarm system of claim 1, wherein said wireless alert unit is a key fob and a cell phone.

8. The child car seat alarm system of claim 1, wherein said casing is attached to the seat by the manufacturing stitching said casing to the seat.

9. A method of informing a child left unattended in a locked vehicle with the help of a child car seat alarm system, the method comprising the steps of:
providing a weight sensor in a child seat which is further connected to a wireless alert unit through Bluetooth technology, wherein said unit is a key fob and a cell phone,
starting the sensor once a child has sat on it,
generating a warning signal once the unit has gone beyond a certain distance from the seat sensor; and
starting an alarm sound signal.
